# EUROPÄISCHE PATENTSCHRIFT

(11) **EP 3 233 483 B1**
(45) Veröffentlichungstag und Bekanntmachung des Hinweises auf die Patenterteilung: **26.02.2020**
(21) Anmeldenummer: 15771871.9
(22) Anmeldetag: 16.09.2015
(51) Int. Cl.: B32B 27/06, B32B 27/30, B32B 27/32, C08J 7/04, C08L 53/02, C08L 23/04, C08L 23/10

(54) **TIEFZIEH- UND NARBFÄHIGE VERBUNDFOLIE, EIN VERFAHREN ZU DEREN HERSTELLUNG UND DEREN VERWENDUNG**
DEEP DRAWING AND TEXTURABLE COMPOSITE FILM, METHOD FOR PRODUCTION THEREOF AND USE THEREOF
FILM COMPOSITE APTE À L'EMBOUTISSAGE ET AU GAUFRAGE ET PROCÉDÉ DE FABRICATION ET UTILISATION DUDIT FILM

(30) Priorität: 18.12.2014 DE 102014226349
(43) Veröffentlichungstag der Anmeldung: 25.10.2017
(73) Patentinhaber: Benecke-Kaliko AG, 30419 Hannover (DE)
(72) Erfinder: HÜLSEWEDE, Volker, 73326 Deggingen (DE); MANI, Joseph, 73054 Eislingen (DE); MALNER, Thomas, 73033 Göppingen (DE)
(74) Vertreter: Preusser, Andrea
(86) Internationale Anmeldenummer: PCT/EP2015/071192
(87) Internationale Veröffentlichungsnummer: WO 2016/096175

(56) Entgegenhaltungen:
- WO-A1-93/20146
- WO-A1-2011/008336
- WO-A1-2014/000177
- US-A1- 2013 237 655

## Beschreibung

Die Erfindung betrifft eine tiefzieh- und narbfähige Verbundfolie, insbesondere für Verkleidungen von Fahrzeuginnenräumen, mit einer Dekorfolie, einer darauf ausgebildeten Lackschicht sowie gegebenenfalls einem Träger und gegebenenfalls weiteren Schichten und Zwischenschichten, ein Verfahren zu deren Herstellung und vorteilhafte Verwendungen.

Folien auf der Basis von thermoplastischen Polyolefinen (TPO) werden bisher zur Herstellung von Bauteilen, so zum Beispiel von Instrumententafeln, Türinnenverkleidungen und dgl., In-Molding-Graining (IMG)-Verfahren verwendet. An Stelle eines herkömmlichen Kaschierprozesses, bei dem genarbte Folien auf ein Trägerteil mittels Vakuum aufkaschiert werden, erfolgt beim IMG-Verfahren der Narbauftrag unmittelbar vor dem Kaschierprozess. Ermöglicht wird dies durch eine mikroporöse Schale, die bereits die Narbstruktur enthält und diese Struktur auf die heiße Folie überträgt. Die genarbte Folie wird im vorgeformten Zustand direkt auf das Trägerteil appliziert. TPO-Folien zeigen ein geringes Gewicht, hohe Alterungsstabilität und sehr geringe Emissionen. Sie zeichnen sich im IMG-Prozess dadurch aus, dass die Abformung aufgrund des sehr plastischen Verhaltens gut ist und nur sehr geringe Rückstellkräfte beim Abkühlen und bei einer nachgelagerten Temperaturbelastung der Bauteile beobachtet werden. Im Gegensatz zu Polyvinylchlorid spalten TPO-basierte Folien keine aggressiven Substanzen ab, die die Werkzeuge angreifen können. Polyolefinbasierte thermoplastische Materialien zeigen aufgrund geringer intermolekularer Wechselwirkungen unter Belastung ein ausgeprägtes plastisches Verhalten. Die im Automobilbereich eingesetzten weichen Folien zeichnen sich durch einen hohen amorphen Anteil aus. Unter hoher mechanischer Belastung, wie sie zum Beispiel bei Einwirkung eines spitzen Gegenstandes auftritt, wird bei Polyolefinen sehr schnell eine bleibende Verformung beobachtet. Insbesondere dann, wenn die Oberfläche sehr feine Strukturelemente, wie zum Beispiel sehr spitze Narbkuppen, aufweist, können diese feinen Strukturen bereits bei der Einwirkung geringer Kräfte bleibend deformiert werden.

Aufgrund des teilkristallinen Charakters von Polyolefinen ist die Härte und Biegesteifigkeit von polyolefinbasierten Materialien höher als bei anderen Polymerklassen, die im Automobilinnenraum zum Einsatz kommen, wie zum Beispiel Weich-PVC oder Polyurethan. Polyolefine können durch weitere Erhöhung des amorphen Anteils sehr weich eingestellt werden. Mit Abnahme des kristallinen Anteils nimmt zwar die Weichheit der Folien zu, aber gleichzeitig die Temperaturstabilität (Erweichungspunkt) sowie die Beständigkeit gegen mechanische Einwirkungen, wie zum Beispiel Kratzen oder Abrieb, ab. Die im Vergleich zu anderen Materialien, wie PVC und Polyurethan, geringe mechanische Beständigkeit von TPO-Folien ist ein wesentlicher Marktnachteil und führt bei stark belasteten Flächen, wie zum Beispiel bei Sitzen von Fahrzeugen, zum Ausschluss von TPO für diese Anwendungen. Anwendungen von Formkörpern im automobilen Innenbereich, basierend auf Styrol-ethylen-butylen-styrol-copolymeren (SEBS), sind bekannt. Derartige Bauteile werden ausschließlich im Spritzguss- oder Powder-Slush-Verfahren hergestellt. Folienanwendungen für den automobilen Innenraum sind auch aus der EP 2 319 886 A4 bekannt. Diese basieren auf Ethylen/Vinylacetat-Copolymeren (EVA), welches für negative Auswirkungen auf den Geruch der Folien bekannt ist. Darüber hinaus sind die Folien vernetzt, was für eine Verwendung im IMG-Verfahren abträglich ist. Nachträglich geprägte vernetzte Folien verlieren aufgrund der Rückstellkräfte bei Einwirkung von Wärme die eingebrachte Oberflächenstruktur.

WO-A-9320146 offenbart eine tiefzieh- und narbfähige Verbundfolie mit einer Dekorschicht, die PP-Block-Copolymer, EPDM und SEBS aufweist.

Ausgehend von dem vorstehend geschilderten Stand der Technik hat sich die Erfindung die Aufgabe gestellt, eine tiefzieh- und narbfähige Verbundfolie, insbesondere für Verkleidungen von Fahrzeuginnenräumen, mit einer Dekorfolie und einer Lackschicht sowie gegebenenfalls weiteren Schichten vorzuschlagen, die sich durch eine signifikante Erhöhung der Kratz- und Abriebbeständigkeit bei gleichzeitig größerer Weichheit im Vergleich mit bekannten IMG-fähigen TPO-Folien, insbesondere TPO-Schaum- und Kompaktfolienlaminate, auszeichnet.

Die Erfindung löst diese Aufgabe durch eine tiefzieh- und narbfähige Verbundfolie gemäß Anspruch 1.

Besondere Eigenschaften der erfindungsgemäßen Verbundfolie sind deren vorteilhafte Werte der Abrieb- und Kratzbeständigkeit. So zeichnet sich die erfindungsgemäße Verbundfolie durch eine Abriebbeständigkeit (nach EN ISO 5470-1) von 7 bis 10 und/oder eine Kratzbeständigkeit (nach dem Erichsen-Test 318) von > 3 N aus. Als besonders günstige Werte können eine Abriebbeständigkeit (nach EN ISO 5470-1) von 8 bis 10 und/oder eine Kratzbeständigkeit (nach dem Erichsen-Test 318) von 5 bis 15 N, insbesondere von 6 bis 9 N, angegeben werden. Die Kratzbeständigkeit wird nach dem Erichsen-Test 318 bestimmt (später im Einzelnen dargestellt).

Die thermoplastische Polymermischung enthält zwingend das bezeichnete Styrol-Blockcopolymer sowie das Homopolymer von Propylen in dem angegebenen quantitativen Rahmen. Dabei ist es bevorzugt, dass in der thermoplastischen Polymermischung auf 20 bis 60 Gewichtsteile thermoplastisches Styrol-Blockcopolymer 8 bis 45 Gewichtsteile thermoplastisches Homopolymer des Propylens entfallen.

Die thermoplastischen Polymermischung enthält zusätzlich ein thermoplastisches Homopolymer von Ethylen. Dabei entfallen 5 bis 80 Gewichtsteile, insbesondere 20 bis 75 Gewichtsteile, des Homopolymer von Ethylen auf die vorstehend bezeichneten Gewichtsteile des thermoplastischen Styrol-Blockcopolymers und des thermoplastischen Homopolymer des Propylens.

Bei der Wahl des thermoplastischen Styrol-Blockcopolymers unterliegt die Erfindung keiner relevanten Einschränkung. Es ist zweckmäßig, dass das thermoplastische Styrol-Blockcopolymer als Styrol-butadien-Copolymer (SBS), Styrol-ethylen-butylen-styrol-Copolymer (SEBS), Styrol-ethylen/propylen-styrol-Copolymer (SEPS), Styrol-ethylen-ethylen-propylen-styrol-Copolymer (SEEPS), Methacrylatbutadien-styrol-Copolymer (MBS) und/oder ungepfropftes oder gepfropftes Styrol-ethylen-random-Copolymer vorliegt. Besonders bevorzugt ist das Styrol-ethylen-butylen-styrol-Copolymer (SEBS). Dieses enthält vorzugsweise weniger als 60 Gew.-% Styrol, insbesondere 5 bis 35 Gew.-% Styrol. Das Copolymer des Propylens enthält zweckmäßigerweise mindestens 60 Gew.-%, vorzugsweise mindestens 75 Gew.-%, insbesondere mindestens 90 Gew.-% Propylen, während das Copolymer von Ethylen mindestens 40 Gew.-%, insbesondere mindestens 50 Gew.-% Ethylen enthält.

Zur Optimierung der Erfindung ist die Einstellung eines vorteilhaften Schmelzindexes MFI des thermoplastischen Polymers zweckmäßig. Bevorzugt ist ein Schmelzindex MFI (nach DIN 53 735) (230°C/2,16 kg) von 0,05 bis 10, insbesondere von 0,1 bis 5, ganz besonders bevorzugt von 0,5 bis 2.

Wesentlicher Bestandteil der erfindungsgemäßen Verbundfolie ist eine auf der Dekorschicht ausgebildete Lackschicht, insbesondere auf der Basis von Polyurethan und/oder Polyacrylaten. Dabei wird der Auftrag zweckmäßigerweise anhand einer Dispersion von Polyurethan bzw. Polyacrylaten vorgenommen. Hierbei handelt es sich insbesondere um eine wässrige Dispersion von Polyurethan- und/oder Polyacrylat-Teilchen, die im Falle des Polyurethan-Lacks insbesondere 2-Komponenten-Lacke darstellen, die in fachmännischer Weise aufgetragen werden können, so beispielsweise durch Streich- oder Siebdruckverfahren, anhand von Rasterwalzen oder nach der Sprühtechnologie, dies mit anschließendem Trocknen und, wenn erforderlich, Vernetzen der Lackbestandteile. Schließlich können auch lösungsmittelbasierte Lacksysteme eingesetzt werden.

Die Dicke der Lackschicht ist nicht von kritischer Bedeutung. Bevorzugt wird es, wenn die Dicke 1 bis 20 µm, insbesondere 1 bis 5 µm, beträgt, wobei der Bereich von 2 bis 3 µm besonders bevorzugt ist. Die Dicke der Dekorschicht ist ebenfalls nicht kritisch. Bevorzugt wird eine Dicke von 0,1 bis 2 mm, insbesondere von 0,2 bis 0,8 mm.

Es ist vorteilhaft, der erfindungsgemäßen Verbundfolie, insbesondere der Dekorfolie, im Verlaufe des Herstellungsprozesses Additive einzuverleiben (Compoundierung). Sie dienen der genauen Einstellung der Materialeigenschaften auf die Bedürfnisse der jeweiligen Anwendung unter Verbesserung der chemischen, elektrischen und mechanischen Eigenschaften. Dabei kann es sich handeln um Stabilisatoren, wie Antioxidantien, Lichtschutzmittel, Wärmestabilisatoren und Flammschutzmittel, Farbmittel, insbesondere Pigmente, Füllstoffe und/oder Verstärkungsstoffe. Von besonderer Bedeutung sind UV-Lichtschutzmittel, wie beispielsweise Benzotriazol-Derivate. Unter den Antioxidationsmitteln sind sterisch gehinderte Phenolderivate, Lactone, Phosphite und/oder sterisch gehinderte Amine, bedeutsam.

Gegenstand der Erfindung ist des Weiteren ein vorteilhaftes Verfahren zur Herstellung der Verbundfolie gemäß der Erfindung. Dieses ist dadurch gekennzeichnet, dass ein thermoplastisches Styrol-Blockcopolymer mit einem thermoplastischen Polypropylen und mit einem thermoplastischen Polyethylen vermischt wird, wobei das thermoplastische Styrol-Blockcopolymer, das thermoplastische Polypropylen und das gegebenenfalls herangezogene thermoplastische Polyethylen jeweils einen Schmelzindex MFI (nach DIN 53 735) (230°C/2,16 kg) von 0,1 bis 10, insbesondere von 0,1 bis 4, aufweisen, auf 10 bis 70 Gewichtsteile thermoplastisches Styrol-Blockcopolymer 5 bis 50 Gewichtsteile thermoplastisches Polypropylen und bis zu 80 Gewichtsteile thermoplastisches Polyethylen entfallen, die Polymermischung zu einer Dekorfolie extrudiert oder kalandriert und diese anschließend mit einer Lackschicht, insbesondere einem auf einem Polyurethan und/oder einem Polyacrylat basierenden Lack, versehen wird. Bevorzugt ist es, wenn die Polymermischung zu einer Deckfolie einer Dicke von 0,1 bis 2 mm extrudiert oder kalandriert wird. Das Extrudieren kann in fachmännischer Weise durchgeführt werden, hierbei wird vorzugsweise ein Einschneckenextruder, ein Doppelschneckenextruder oder ein Planetwalzenextruder herangezogen. Das Kalandrieren kann ebenfalls in üblicher Weise erfolgen.

Die Dekorfolie kann mit unterschiedlichen Trägern versehen werden, insbesondere mit einer weiteren kompakten thermoplastischen Folie. Grundsätzlich bestehen bei der Ausbildung des Trägers vielfältige Möglichkeiten. Es kann sich dabei handeln um kompakte Folienmaterialien mit Dichten zwischen 800 und 950 kg/m³ basierend auf TPO, die thermisch mit der beschriebenen Dekorschicht verbunden werden können, geschäumte polyolefinbasierte Flächengebilde mit Dichten zwischen bevorzugt 40 und 800 kg/m³, Textilien, wie Gewebe, Maschenware oder Vliese aus den üblichen Materialien, wie z.B. Polyester, Polypropylen oder Baumwolle, entweder thermisch oder durch Verkleben mit der Dekorfolie verbunden, sowie metallische Oberflächen.

Weitere vorteilhafte Ausgestaltungen des erfindungsgemäßen Verfahrens lassen sich wie folgt darstellen, dies jeweils unabhängig voneinander: Die thermoplastische Polymermischung wird auf eine Shore-Härte A (nach DIN ISO 7619-1) von 60 bis 85, insbesondere von 60 bis 70, einen Schmelzindex MFI (nach DIN 53 735) (230°C/2,16 kg) von 0,05 bis 10, insbesondere von 0,1 bis 5, eingestellt, wobei der Bereich von 0,5 bis 2 besonders bevorzugt ist. Zweckmäßigerweise wird eine thermoplastische Polymermischung eingesetzt, die 20 bis 60 Gewichtsteile thermoplastisches Styrol-Blockcopolymer, 8 bis 45 Gewichtsteile thermoplastisches Homopolymer des Propylens und ein thermoplastisches Homopolymer von Ethylen enthält und hiervon 5 bis 80 Gewichtsteile, insbesondere 20 bis 75 Gewichtsteile, auf die vorstehend bezeichneten Gewichtsteile des thermoplastischen Styrol-Blockcopolymers und des thermoplastischen Homo- oder Copolymers des Propylens entfallen. Die bevorzugten thermoplastischen Styrol-Blockcopolymere wurden vorstehend bereits im Zusammenhang mit der Schilderung der erfindungsgemäßen Verbundfolie bezeichnet, des Weiteren die Möglichkeit des Einbezugs von Additiven.

Die erfindungsgemäßen tiefzieh- und narbfähigen Verbundfolien lassen sich mit Vorteil vielfältigen Verwendungen zuführen: Daher betrifft die Erfindung auch deren Verwendung als Kunstleder zur Herstellung von Kunstlederartikeln oder Kunstlederformteilen. Dies gilt vor allem zur Herstellung von Bauteilen von Kraftfahrzeugen, insbesondere zur Verkleidung von Fahrzeuginnenräumen, sowie zur Herstellung von Kunstlederartikeln im Sport- und Modebereich. Hierbei kann es sich beispielsweise um Sportschuhe oder um modische Taschen und dergleichen handeln. Dabei ist es besonders vorteilhaft, wenn die erfindungsgemäße tiefziehfähige Verbundfolie durch Narbung eine strukturierte Oberfläche erhält. Dies kann vor, während oder nach der Herstellung des Kunstlederformteils bzw. des Kunstlederartikels erfolgen, so insbesondere während der Herstellung des Kunstlederformteils bzw. des Kunstlederartikels in einem narbgebenden Negativ-Ziehverfahren (In-Mold-Graining).

Die Erfindung zeichnet sich durch eine Anzahl wertvoller Vorteile aus: Die besonderen Vorteile sind eine hohe Weichheit und die im Vergleich zu TPO verbesserte Elastizität der Verbundfolien. Dadurch wird bei den weichen Verbundfolien gleichzeitig eine Verbesserung der mechanischen Eigenschaften, insbesondere der Kratz- und Abriebbeständigkeit, erreicht. Zusätzlich kann eine deutliche Verbesserung der Medienbeständigkeit, insbesondere gegen Sonnenschutzmittel, erreicht werden. Dies ist eine seit einiger Zeit von den Weiterverarbeitern besonders gestellte Anforderung.

Die Erfindung bietet vielfältige Möglichkeiten der Modifizierung der Verbundfolie, dies jeweils nach den speziellen Anwendungsfällen. Um z.B. die Kosten der Gesamtkonstruktion zu verringern und gleichzeitig eine gute Tiefziehfähigkeit zu erreichen, kann z.B. eine weitere Schicht als weiche amorphe TPO-Schicht ausgeführt werden. Hier ist darauf zu achten, dass die Dekorschicht des kompakten Folienaufbaus im unverstreckten Zustand mindestens eine Dicke von 0,1 mm, bevorzugt eine Dicke von 0,2 mm, aufweist. Die nachfolgende kompakte Schicht ergänzt die Dekorschicht bis zu einer vorteilhaften Dicke des gesamten Kompaktfolienaufbaus. Die kompakte Schicht zeichnet sich vorzugsweise dadurch aus, dass sie die erforderliche Temperaturstabilität sowohl für den Herstellungsprozess als auch für die Nutzung der Verbundfolie des Bauteils mit angestrebter Weichheit besitzt. Auch lässt sich die erfindungsgemäße Verbundfolie zweckmäßig auf ein textiles Flächengebilde laminieren. Gerade in diesem Fall ist sie insbesondere genarbt als Kunstleder für den Automobil- oder Modebereich von besonderem Nutzen. Zudem kann die Dekorschicht vor der Laminierung mit einem Teil mit einer weiteren kompakten oder geschäumten Schicht laminiert werden. Schließlich kann die zweilagige kompakte Verbundfolie, wobei die Dekorschicht vorzugsweise eine Dicke von 0,3 mm hat, auf eine weitere Schicht von 0,4 mm, bestehend aus TPO im Co-Extrusionsverfahren, zu einem gesamten Verbundgebilde extrudiert werden. Dieses Material wird mit einer Lackschicht ausgestattet, wobei ein Polyurethan-basierter Lack herangezogen wird.

Denkbar sind vielfältige Konstruktionen, bei denen an Stelle von geschäumten Materialien stets kompakte Folien herangezogen werden. Derartige Kompaktfolien weisen den Vorteil auf, geometrisch komplexere Bauteile im Thermoformierverfahren mit Verstreckungsgraden von > 80% zu erzeugen. Gewöhnliche Schaumfolienlaminate weisen hier den Nachteil auf, dass diese Konstruktionen in derartigen Verstreckungsbereichen bei der Verarbeitung aufgrund der schlechteren mechanischen Eigenschaften, bedingt durch die niedrigeren Dichten des Schaumes, reißen oder die Schäumung kollabieren. Folien, die auf die Dekorschichten laminiert werden, können die üblicherweise bekannten TPObasierten Folien sein. Es können auch alle anderen gängigen thermoformierbaren Flächengebilde herangezogen werden.

Die Erfindung wird nachfolgend anhand von Beispielen noch näher erläutert.

### Beispiele (sie entsprechen nicht den Ansprüchen)

Bei der Herstellung der erfindungsgemäßen Verbundfolie wird ein Gemisch, bestehend aus dem thermoplastischen Styrol-Blockcopolymer, einem Polypropylen und einem Polyethylen sowie Additiven, wie Pigmenten und Stabilisatoren, einem gleichkämmenden Doppelschneckenextruder zudosiert. In dem Extruder findet die Plastifizierung und die Homogenisierung der einzelnen Bestandteile bei einer Prozesstemperatur von etwa 200°C statt. Die so homogenisierte Schmelze wird über eine Flachdüse zu einer Folie ausgetragen. Die so hergestellte Folie wird in einem zweiten Prozessschritt mit mehreren Schichten eines Polyurethan-basierten Lackes beschichtet, so dass eine etwa 5 µm dicke Lackschicht aufgebaut wird. Vor der Beschichtung findet eine Vorbehandlung der Oberfläche statt, die die Haftung des polaren Lacksystems an der unpolaren Oberfläche ermöglicht. Dies erfolgt durch Korona-Behandlung. Eine Plasmabehandlung ist ebenfalls möglich, auch eine Fluorierung der Oberfläche. Die so erhaltene lackierte Folie wird in einem thermischen Kaschierschritt mit einem Polyolefin-basierten Schaum kaschiert. Hierbei wird die auf etwa 180°C erwärmte Folie in einem Kaschierspalt mit einem Schaum zusammengefügt.

Die nachfolgende Tabelle 1 erfasst 5 Beispiele, zu denen die jeweiligen thermoplastischen Ausgangsmaterialien, die physikalischen Werte der Shore-Härte A, der Kratzbeständigkeit nach dem Erichsen-Test 318 sowie die Abriebbeständigkeit bezeichnet sind. Gleichzeitig werden die Medienbeständigkeit und die Temperaturbeständigkeit qualitativ angegeben.

**Tabelle 1 (Beispiele gehören nicht zur Erfindung)**

| Beispiel | 1 | 2 | 3 | 4 | 5 |
|---|---|---|---|---|---|
| SEBS | 80 | 20 | 40 | 50 | 60 |
| PE | | 50 | 40 | 10 | |
| PP-1 | | | 20 | | 40 |
| PP-2 | 20 | | | | |
| PP-3 | | 40 | | 40 | |
| Stabilisator | 2 | 2 | 2 | 2 | 2 |
| Pigment | 3 | 3 | 3 | 3 | 3 |
| Shore D | | | | | 26 |
| Shore A | 65 | 75 | 70 | 75 | 80 |
| Kratzbeständigkeit nach Erichsen (N) (Erichsen-Test 318) | 3 | 3 | 5 | >10 | >10 |
| Taber Abriebbeständigkeit (nach EN ISO 45470-1) | 8 | 7 | 5 | 8 | 8 |
| Medienbeständigkeit | ok | ok | ok | ok | ok |
| Temperaturbeständigkeit | ok | ok | ok | ok | ok |

### Anmerkungen:

PE: LLD-Polyethylen
PP-1: Homo-Polypropylen
PP-2: random-Polypropylen
PP-3: schlagzählmodifiziertes Polypropylen
Stabilisator: UV-Stabilisator HALS
Pigment: Ruß
Medienbeständigkeit gegen Sonnenschutzöl gemessen nach der Ringmethode (Literaturverweis PAPP PWT 7328)
Temperaturbeständigkeit: Bestimmung der Narbstabilität nach 21 Tagen und bei 120°C
Kratzbeständigkeit nach dem Erichsen-Test 318 (nachfolgend beschrieben)

### Bestimmung der Kratzbeständigkeit nach dem Erichsen-Test 318:

Die Handhabung des Härteprüfstabs (vertrieben durch die Erichsen GmbH & Co. KG, Hemer, DE) ist einfach. Mit dem Schieber die geschätzte oder schon bekannte Federkraft einstellen. Das Gerät senkrecht mit der Spitze auf die Prüfstelle setzen und einen etwa 5 bis 10 cm langen Strich mit etwa 10 cm/s ziehen. Der Prüfstift sollte eine gerade noch sichtbare Spur hinterlassen. Bei zu starker Federspannung ist die Spur deutlich sichtbar. Bei zu geringer Federspannung ist keine Spur zu sehen. Der festgeklemmte Schieber fixiert die jeweils eingestellte Kraft in Newton. Drei Kraftbereiche sind als Skalen in den Härteprüfstab eingraviert: 0-3 N (blaue Markierung), 0-10 N (rote Markierung) und 0-20 N (gelbe Markierung). Die zu dem jeweiligen Kraftbereich gehörige Feder ist in derselben Farbe wie die Skalamarkierung gekennzeichnet. Eine wichtige Voraussetzung zur Ermittlung brauchbarer Ergebnisse ist die gefühlvolle Führung des Stabs. Bei zu hohem Druck auf die zu prüfende Oberfläche kann auch der äußere Rand des Kopfstücks eine Kratzspur hierauf hinterlassen und so die ermittelten Ergebnisse verfälschen bzw. deren Interpretation erschweren.

### Technische Daten:

Spiralfeder: Federstahl; Prüfspitze Nr. 1; Hartmetallkugeln; Prüfspitze Ø 0,75mm nach Bosch; Gesamtlänge: 160 mm; Prüfspitzendurchmesser: 16 mm; Gewicht, netto: etwa 250 g

## Patentansprüche

1. Tiefzieh- und narbfähige Verbundfolie, insbesondere für Verkleidungen von Fahrzeuginnenräumen, mit einer Dekorfolie, einer darauf ausgebildeten Lackschicht sowie gegebenenfalls einem Träger und weiteren Schichten und Zwischenschichten, **dadurch gekennzeichnet, dass** die Dekorschicht ein thermoplastisches Styrol-Blockcopolymer und ein thermoplastisches Homopolymer von Propylen enthält, in der thermoplastischen Polymermischung auf 10 bis 70 Gewichtsteile des thermoplastischen Styrol-Blockcopolymers 5 bis 50 Gewichtsteile des Homopolymers von Propylen entfallen und die thermoplastische Polymermischung eine Shore-Härte A (nach DIN ISO 7619-1) von 50 bis 90 aufweist und wobei die thermoplastische Polymermischung zusätzlich ein thermoplastisches Homopolymer von Ethylen enthält und hiervon 5 bis 80 Gewichtsteile, insbesondere 20 bis 75 Gewichtsteile, auf die Gewichtsteile des thermoplastischen Styrol-Block-copolymers und des thermoplastischen Homopolymers des Propylens entfallen.

2. Verbundfolie nach Anspruch 1, **dadurch gekennzeichnet, dass** sie eine Abriebbeständigkeit (nach EN ISO 5470-1) von 7 bis 10 und/oder eine Kratzbeständigkeit (nach dem Erichsen-Test 318) von > 3 N aufweist.

3. Verbundfolie nach mindestens einem der vorhergehenden Ansprüche, **dadurch gekennzeichnet, dass** die thermoplastische Polymermischung einen Schmelzindex MFI (nach DIN 53 735) (230°C/2,16 kg) von 0,05 bis 10, insbesondere von 0,1 bis 5, aufweist.

4. Verbundfolie nach mindestens einem der vorhergehenden Ansprüche, **dadurch gekennzeichnet, dass** die Dekorschicht Additive enthält, insbesondere Stabilisatoren, Farbmittel, Füllstoffe und/oder Verstärkungsstoffe.

5. Verbundfolie nach mindestens einem der vorhergehenden Ansprüche, **dadurch gekennzeichnet, dass** die Dekorschicht eine Lackschicht auf Basis von Polyurethanen und/oder Polyacrylaten aufweist.

6. Verfahren zur Herstellung einer Verbundfolie nach mindestens einem der vorhergehenden Ansprüche, **dadurch gekennzeichnet, dass** ein thermoplastisches Styrol-Blockcopolymer mit einem thermoplastischen Polypropylen und mit einem thermoplastischen Polyethylen vermischt wird, wobei das thermoplastische Styrol-Blockcopolymer, das thermoplastische Polypropylen und das herangezogene thermoplastische Polyethylen jeweils einen Schmelz-index MFI (nach DIN 53 735) (230°C/2,16 kg) von 0,1 bis 10, insbesondere von 0,1 bis 4, aufweisen, auf 10 bis 70 Gewichtsteile thermoplastisches Styrol-Blockcopolymer 5 bis 50 Gewichtsteile thermoplastisches Polypropylen und bis zu 80 Gewichtsteile thermoplastisches Polyethylen entfallen, die Polymermischung zu einer Dekorfolie extrudiert oder kalandriert und diese anschließend mit einer Lackschicht, insbesondere basierend auf einem Polyurethan und/oder einem Polyacrylat, versehen wird.

7. Verfahren nach Anspruch 6, **dadurch gekennzeichnet, dass** die mit einer Lackschicht versehene Dekorfolie auf einen Träger, insbesondere in Form einer kompakten thermoplastischen Folie, aufgebracht wird.

8. Verfahren nach Anspruch 6 oder 7, **dadurch gekennzeichnet, dass** die thermoplastische Polymermischung auf eine Shore-Härte A (nach DIN ISO 7619-1) von 60 bis 85, insbesondere von 60 bis 70, eingestellt wird.

9. Verfahren nach mindestens einem der Ansprüche 6 bis 8, **dadurch gekennzeichnet, dass** eine thermoplastische Polymermischung eines Schmelzindexes MFI (nach DIN 53 735) (230°C/2,16 kg) von 0,05 bis 10, insbesondere von 0,1 bis 5, eingesetzt wird.

10. Verfahren nach mindestens einem der Ansprüche 6 bis 9, **dadurch gekennzeichnet, dass** eine thermoplastischen Polymermischung eingesetzt wird, in der auf 20 bis 60 Gewichtsteile thermoplastisches Styrol-Blockcopolymer 8 bis 45 Gewichtsteile thermoplastisches Homopolymer des Propylens entfallen.

11. Verwendung der Verbundfolie nach mindestens einem der vorhergehenden Ansprüche 1 bis 5 als Kunstleder zur Herstellung von Kunstlederartikeln oder Kunstlederformteilen.

12. Verwendung der Verbundfolie nach Anspruch 11 als Kunstleder zur Herstellung von Bauteilen von Kraftfahrzeugen, insbesondere zur Verkleidung von Fahrzeuginnenräumen, sowie zur Herstellung von Kunstlederartikeln im Sport- und im Modebereich.

13. Verwendung nach Anspruch 11 oder 12, **dadurch gekennzeichnet, dass** die Verbundfolie vor, während oder nach der Herstellung des Kunstlederformteils bzw. des Kunstlederartikels genarbt wird.

## Claims

1. Thermoformable and grainable composite film, in particular for cladding of vehicle interiors, with a decorative film, a lacquer layer configured thereon and optionally a carrier and further layers and intervening layers, **characterized in that** the decorative layer comprises a thermoplastic styrene block copolymer and a thermoplastic homopolymer of propylene, the quantity of the homopolymer of propylene, based on 10 to 70 parts by weight of the thermoplastic styrene block copolymer, in the thermoplastic polymer mixture is 5 to 50 parts by weight, and the Shore A hardness of the thermoplastic polymer mixture is 50 to 90 (in accordance with DIN ISO 7619-1), and where the thermoplastic polymer mixture additionally comprises a thermoplastic homopolymer of ethylene and the quantity thereof, based on the said parts by weight of the thermoplastic styrene block copolymer and of the thermoplastic homopolymer of propylene, is 5 to 80 parts by weight, in particular 20 to 75 parts by weight.

2. Composite film according to Claim 1, **characterized in that** its abrasion resistance (in accordance with EN ISO 5470-1) is 7 to 10 and/or its scratch resistance (by the Erichsen 318 test) is > 3 N.

3. Composite film according to at least one of the preceding claims, **characterized in that** the melt index MFI (in accordance with DIN 53 735) (230°C/2.16 kg) of the thermoplastic polymer mixture is 0.05 to 10, in particular 0.1 to 5.

4. Composite film according to at least one of the preceding claims, **characterized in that** the decorative layer comprises additives, in particular stabilizers, colorants, fillers and/or reinforcing materials.

5. Composite film according to at least one of the preceding claims, **characterized in that** the decorative layer has a lacquer layer based on polyurethanes and/or on polyacrylates.

6. Process for the production of a composite film according to at least one of the preceding claims, **characterized in that** a thermoplastic styrene block copolymer is mixed with a thermoplastic polypropylene and with a thermoplastic polyethylene, where the melt index MFI (in accordance with DIN 53 735) (230°C/2.16 kg) of the thermoplastic styrene block copolymer, of the thermoplastic polypropylene and of the thermoplastic polyethylene used is in each case 0.1 to 10, in particular 0.1 to 4, the quantities of thermoplastic polypropylene and of thermoplastic polyethylene, based on 10 to 70 parts by weight of thermoplastic styrene block copolymer, are respectively 5 to 50 parts by weight and up to 80 parts by weight, the polymer mixture is extruded or calendered to give a decorative film, and then a lacquer layer, in particular based on a polyurethane and/or on a polyacrylate, is provided thereto.

7. Process according to Claim 6, **characterized in that** the decorative film with a lacquer layer provided thereto is applied to a carrier, in particular in the form of a compact thermoplastic film.

8. Process according to Claim 6 or 7, **characterized in that** the Shore A hardness (in accordance with DIN ISO 7619-1) of the thermoplastic polymer mixture is adjusted to 60 to 85, in particular 60 to 70.

9. Process according to at least one of Claims 6 to 8, **characterized by** use of a thermoplastic polymer mixture with melt index MFI (in accordance with DIN 53 735) (230°C/2.16 kg) 0.05 to 10, in particular 0.1 to 5.

10. Process according to at least one of Claims 6 to 9, **characterized by** use of a thermoplastic polymer mixture in which the quantity of thermoplastic homopolymer of propylene, based on 20 to 60 parts by weight of thermoplastic styrene block copolymer, is 8 to 45 parts by weight.

11. Use of the composite film according to at least one of preceding Claims 1 to 5 as synthetic leather for the production of synthetic leather items or of synthetic leather mouldings.

12. Use of the composite film according to Claim 11 as synthetic leather for the production of components of motor vehicles, in particular for the cladding of motor vehicle interiors, and also for the production of synthetic leather items in the sports sector and in the fashion sector.

13. Use according to Claim 11 or 12, **characterized in that** the composite film is grained before, during or after the production of the synthetic leather moulding or of the synthetic leather item.

## Revendications

1. Film composite apte à l'emboutissage et au chagrinage, notamment pour des habillages d'espaces intérieurs de véhicules, comprenant un film décoratif, une couche de vernis formée sur celui-ci, ainsi qu'éventuellement un support et des couches et couches intermédiaires supplémentaires, **caractérisé en ce que** la couche décorative contient un copolymère séquencé de styrène thermoplastique et un homopolymère de propylène thermoplastique, 5 à 50 parties en poids de l'homopolymère de propylène étant contenues dans le mélange de polymères thermoplastiques pour 10 à 70 parties en poids du copolymère séquencé de styrène thermoplastique, et le mélange de polymères thermoplastiques présentant une dureté Shore A (selon DIN ISO 7619-1) de 50 à 90, et le mélange de polymères thermoplastiques contenant en outre un homopolymère d'éthylène thermoplastique, et 5 à 80 parties en poids, notamment 20 à 75 parties en poids, de celui-ci étant contenues par rapport au parties en poids du copolymère séquencé de styrène thermoplastique et de l'homopolymère de propylène thermoplastique.

2. Film composite selon la revendication 1, **caractérisé en ce qu'**il présente une résistance à l'abrasion (selon EN ISO 5470-1) de 7 à 10 et/ou une résistance aux éraflures (selon le test Erichsen 318) > 3 N.

3. Film composite selon au moins l'une quelconque des revendications précédentes, **caractérisé en ce que** le mélange de polymères thermoplastiques présente un indice de fluidité MFI (selon DIN 53 735) (230 °C/2,16 kg) de 0,05 à 10, notamment de 0,1 à 5.

4. Film composite selon au moins l'une quelconque des revendications précédentes, **caractérisé en ce que** la couche décorative contient des additifs, notamment des stabilisateurs, des colorants, des charges et/ou des matières renforçantes.

5. Film composite selon au moins l'une quelconque des revendications précédentes, **caractérisé en ce que** la couche décorative comprend une couche de vernis à base de polyuréthanes et/ou de polyacrylates.

6. Procédé de fabrication d'un film composite selon au moins l'une quelconque des revendications précédentes, **caractérisé en ce qu'**un copolymère séquencé de styrène thermoplastique est mélangé avec un polypropylène thermoplastique et avec un polyéthylène thermoplastique, le copolymère séquencé de styrène thermoplastique, le polypropylène thermoplastique et le polyéthylène thermoplastique utilisé présentant chacun un indice de fluidité MFI (selon DIN 53 735) (230 °C/2,16 kg) de 0,1 à 10, notamment de 0,1 à 4, 5 à 50 parties en poids de polypropylène thermoplastique et jusqu'à 80 parties en poids de polyéthylène thermoplastique étant contenues pour 10 à 70 parties en poids de copolymère séquencé de styrène thermoplastique, le mélange de polymères est extrudé ou calandré en un film décoratif, puis celui-ci est muni d'une couche de vernis, notamment à base d'un polyuréthane et/ou d'un polyacrylate.

7. Procédé selon la revendication 6, **caractérisé en ce que** le film décoratif muni d'une couche de vernis est appliqué sur un support, notamment sous la forme d'un film thermoplastique compact.

8. Procédé selon la revendication 6 ou 7, **caractérisé en ce que** le mélange de polymères thermoplastiques est ajusté à une dureté Shore A (selon DIN ISO 7619-1) de 60 à 85, notamment de 60 à 70.

9. Procédé selon au moins l'une quelconque des revendications 6 à 8, **caractérisé en ce qu'**un mélange de polymères thermoplastiques ayant un indice de fluidité MFI (selon DIN 53 735) (230 °C/2,16 kg) de 0,05 à 10, notamment de 0,1 à 5, est utilisé.

10. Procédé selon au moins l'une quelconque des revendications 6 à 9, **caractérisé en ce qu'**un mélange de polymères thermoplastiques dans lequel 8 à 45 parties en poids d'homopolymère de propylène thermoplastique sont contenues pour 20 à 60 parties en poids de copolymère séquencé de styrène thermoplastique est utilisé.

11. Utilisation du film composite selon au moins l'une quelconque des revendications 1 à 5 précédentes en tant que cuir artificiel pour la fabrication d'articles en cuir artificiel ou de pièces moulées en cuir artificiel.

12. Utilisation du film composite selon la revendication 11 en tant que cuir artificiel pour la fabrication de composants de véhicules automobiles, notamment pour l'habillage d'espaces intérieurs de véhicules, ainsi que pour la fabrication d'articles en cuir artificiel dans le domaine du sport et de la mode.

13. Utilisation selon la revendication 11 ou 12, **caractérisée en ce que** le film composite est chagriné avant, pendant ou après la fabrication de la pièce moulée en cuir artificiel ou de l'article en cuir artificiel.
